**Europäisches Patentamt**

**European Patent Office**

**Office européen des brevets**

(19)

(11) Publication number: **0 037 626**
**A2**

(12) # EUROPEAN PATENT APPLICATION

(21) Application number: **81300625.1**

(22) Date of filing: **16.02.81**

(51) Int. Cl.³: **G 01 C 9/00**
**G 01 D 15/08**

(30) Priority: **28.02.80 GB 8006760**

(43) Date of publication of application:
**14.10.81 Bulletin 81/41**

(84) Designated Contracting States:
**AT CH DE FR GB LI NL SE**

(71) Applicant: **PA Management Consultants Limited**
**Hyde Park House 60a Knightsbridge**
**London SW1X 7LE(GB)**

(72) Inventor: **Plummer, Dexter Robert**
**9 Shakletons**
**Ongar Essex(GB)**

(74) Representative: **Nash, Keith W.**
**KEITH W. NASH & Co. 22 Hills Road**
**Cambridge CB2 1JP(GB)**

(54) **Acceleration or inclination measuring instrument.**

(57) A measuring instrument is described for measuring inclination or acceleration. For inclination only three strings are required. For acceleration four strings are required.

The instrument comprises a mass (38) suspended by three or four stretched strings (32, 34, 36 or 70, 72, 74 and 76) with the strings being suspended from terminals within a frame (10).

The strings are conductive as is also the mass (38) and a flexible electrical connection (46) allows connection to be made to the star point of the three or four conductive strings.

The strings form the frequency determining elements in the outputs of negative resistance amplifiers (50, 52, 54 etc.,) and differential amplifiers (56, 58, 60) together with decoding circuits (62) provide output signals for a computing device (64) which inturn provides data for an indicator (66) to indicate the inclination of the frame (10) relative to some datum. Calibrating means (68) is provided for calibrating the read-out device (66).

Where four strings are employed (see Fig. 2) a further display device (94) may be provided to indicate the magnitude of the accelerating force, the first display device (66) indicating the direction in which the accelerating force is acting.

In one embodiment a generally triangular mass (108) is cut away on it's underside to allow it to rest on three limbs (120, 122, 124) of a spider having an integral central webb (188) which is secured to the triangular weight (108). The limbs of the spider are secured at their ends to mounting blocks one of which is resiliently biased in an outward direction to tension the spider.

The underside of the triangular mass (108) is formed with protrusions (154) for engaging in locating channels (156) formed in the base of a retaining housing (100).

./...

Croydon Printing Company Ltd.

Fig.3.

Title:   Measuring Instrument

DESCRIPTION

Field of invention

This invention concerns measuring instruments and in particular a device for measuring acceleration.  The device can be adapted to serve as a clinometer or simple spirit level or can be further adapted to measure acceleration in any direction and can thus be used in an accelerometer.

Background to the invention

Devices capable of measuring acceleration are required in many engineering applications.  Hitherto the measurement of level in civil engineering or the more general measurement of inclination in civil and constructional engineering has entailed the use of spirit levels with a displaceable air bubble in a column of oil and a suitable housing for maintaining the column of oil substantially horizontal at the particular angle of inclination which is to be measured so that any slight deviations therefrom will be revealed by displacement of the bubble from a mean position within the column.

Where the horizontal is to be measured, the column of oil is parallel to the surface which is to be abutted against the surface to be checked.

Where the vertical is to be checked, the column of oil is arranged perpendicular to the surface of the measuring device which is to be abutted against the surface to be checked.

For other angles of inclination between the horizontal and the vertical, the column is maintained at an appropriate given angle relative to the surface which is to be abutted against the surface to be checked.

Whilst such devices can be used to determine whether or not a surface is substantially near to one angle of inclination or another, they do not measure the inclination of a surface relative to some data and before such a device can be used the surface which is to be checked has to be substantially close to the angle which it is supposed to adopt relative to the measuring datum (i.e. the vertical direction) before the instrument can be used.

Furthermore, levels cannot be used to measure acceleration although for the purposes of measuring verticals and horizontals and inclinations relative thereto, the datum which is normally used is the acceleration vector of the gravitational attraction of the earth at the point at which the measurement is being made and it would, therefore, appear more logical to measure inclination relative to the vertical by measuring acceleration forces rather than merely observing whether a bubble of air occupies a particular position within a column of oil.

It is also to be noted that by providing an instrument in which the acceleration force due to gravity can be

- 3 -

compensated for, any other acceleration of the instrument
can be measured by monitoring changes in the instrument
brought about as a result of movement and acceleration in
any other direction.

Such devices have application in inertial navigation
systems, auto pilots and instruments for measuring vehicle
performance.

Object of the invention

It is an object of the present invention to provide
an instrument which will produce a signal (preferably an
electrical signal) indicative of the acceleration (if any)
of the instrument or indicative of the direction of a
force due to an acceleration acting on the instrument
such as the gravitational attraction of the earth.

## The invention

According to one aspect of the present invention an instrument for measuring acceleration comprises a mass suspended within a rigid frame by means of at least three stretched strings connecting the mass to three different points within the frame, each of the strings being formed at least in part from electrically conductive material so that an electric current can pass along the length of the string, electrical connections to allow each of the strings to be connected to a negative resistance power supply and means for creating at least a local magnetic field in the region of each of the strings, the negative resistance of the electrical supply being adjusted so as to just compensate for electrical losses so that any vibrations set up in the string will be maintained due to the back EMF induced as the string moves through the magnetic field.

The magnetic field vector must subtend an angle greater than zero degrees or less than $180^{\circ}$ to the direction of each string and preferably is perpendicular to the direction of each string.

Preferably means is provided for adjusting the tension in the strings.

Conveniently the mass is electrically conductive and a single flexible electrical connection is made to the suspended mass to provide a common return path for the three electrical circuits and electrical terminals are provided on insulated supports on the frame for making the other electrical connection to each of the strings.

Where very high accuracy is required, magnetic means or shielding means may be provided so as to either compensate for (and therefore cancel out) or completely screen as by a mu-metal sheild the earth's magnetic field from the region of the strings, so that the only magnetic field in the region of the strings is that of the locally induced magnetic field.

In a preferred arrangement, the three strings are symmetrically located around the mass so that the angle between adjoining strings is $120^{\circ}$.

If the plane of the three strings is vertical, then the resultant of the tensions of the three strings suspending the mass is equal to the weight of that mass added to the product of the mass and its acceleration.

It would also be seen that since the strings are in tension, the natural frequency of resonance of each of the strings will depend on the actual tension of that string. In the event that one of the strings is substantially vertical then the tension in that string will be greater than the tension in the other two strings and consequently the resonance frequency for that string will be higher than the corresponding natural resonant frequency of either of the other two strings. When the first string is actually vertical, provided the plane containing the three strings is itself vertical, the tensions in the other two strings will be identical and consequently their natural frequencies will be identical.

The comparison of the frequency of electrical signals is a relatively straight forward exercise since by combining two electrical signals which are not in phase, a resultant signal is produced corresponding to the difference in frequency between the two electrical signals. Near the position of identity, the different signal will be very low and will eventually become zero and a null-point detector is not only relatively simple to construct but is also very accurate in use.

It will also be noted that if a device constructed in accordance with the first aspect of the invention is arranged with the plane of the three strings substantially horizontal (i.e. disregarding any sag in the strings due to the weight of the mass) the tensions in the three strings will be equal and therefore the resonant frequency of the three strings will also be the same. In the event that the device is tilted so that the plane of the three strings is no longer substantially horizontal, the tensions in the three strings will alter and this will be evidenced by a change in the relative natural resonant frequencies of the three strings which as previously described can be detected as a difference signal and an indication can be given as to how much the plane of the three strings differs from the horizontal.

- 7 -

According to another aspect of the invention, an instrument which is capable of measuring an acceleration vector comprises a mass suspended freely within a rigid frame by means of four stretched strings extending between the mass and four different points within the frame, each of the strings being formed at least in part from an electrically conductive material and means being provided for producing a local magnetic field in the region of each of the strings and negative amplifier means associated with each of the strings and adjusted so as to just compensate for losses in the circuit containing the amplifier and the string so as to maintain oscillation of the string at its natural resonant frequency.

Preferably the four strings are arranged so that they are directed towords the vertices of a regular tetrahedron with the mass at the centre thereof.

By arranging the strings in this way, the resultant tension in the strings at any instant will be determined solely by the acceleration of the mass and since there are now four strings, an appropriate set of equations can be set up and solved using the information obtained by measuring thechange in frequency of the strings due to changes in tension, so as to indicate the direction as well as the magnitude of the accelerating force. It will be seen that the acceleration vector can be expressed in terms of three cartesian co-ordinates derived from the information

- 8 -

relating to the differential resonant frequencies or simply as a resultant force and direction in which it acts.

As previously mentioned, means is preferably provided for adjusting the tensions in the four strings for initially setting up the instrument.

In addition magnets may be located adjacent to each of the strings for setting up the local magnetic fields and a common electrical connection may as previously described with reference to the first aspect of the invention be made to the three strings through the intermediary of the suspended mass provided the latter is formed from electrically conductive material.

Individual electrical connections to the four strings may be made as before via electrically conductive terminals supported in insulating supports within the frame.

- 9 -

The invention will now be described by way of example with reference to the accompanying drawings.

In the drawings

Fig.1 is a cross section through an instrument constructed in accordance with the first aspect of the invention,

Fig.2 is a diagrammatic representation of the four tensioned springs supporting the mass within an accelerometer constructed in accordance with the third aspect of the present invention,

Fig.3 is an exploded perspective view of an embodiment of the invention serving as a level/clinometer,

Fig.4 is a block circuit diagram of an alternative signal processing system, and

Fig.5 is a vector diagram.

Detailed description of the drawings

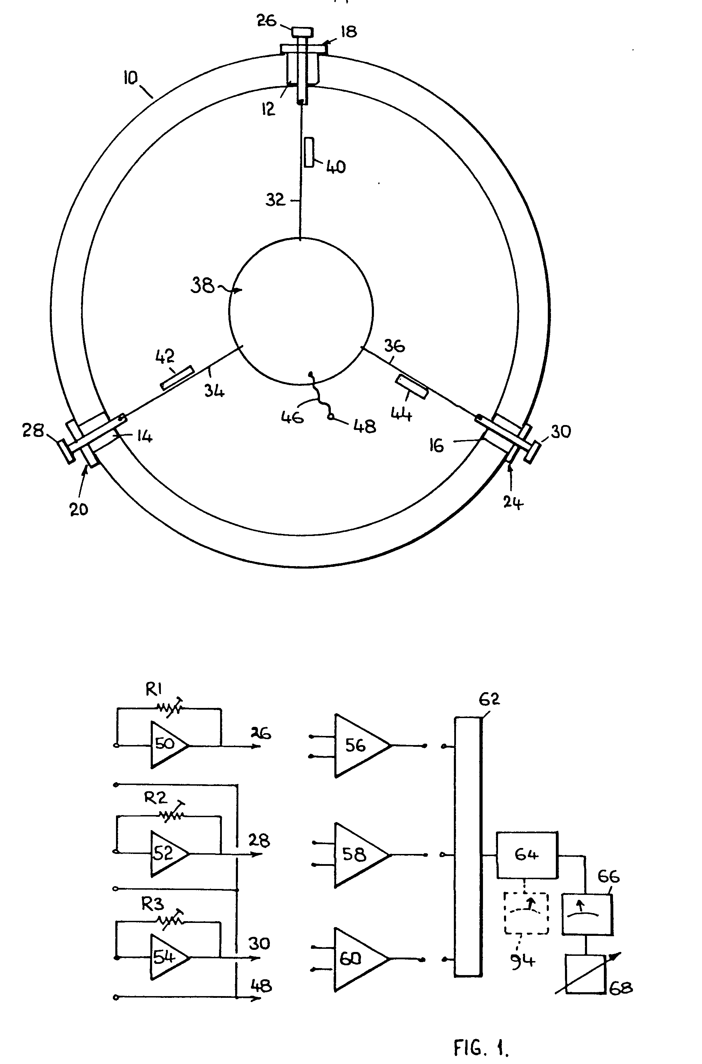

Fig.1 illustrates the layout of a simple instrument which can be used for determining level and inclination typically during construction work and the like. The device comprises a rigid circular housing 10 having three equally spaced apart apertures 12, 14 and 16 into each of which is fitted an insulating bush 18 20 and 24 respectively. Through each of the bushes is threaded an electrically conductive spigot 26,28 and 30 respectively, the outer ends of each spigot forming an electrical terminal and the inner end an anchorage point for a wire. Three wires are attached to the three anchorage points of the spigots namely wires 32, 34, 36 respectively, the three wires being anchored at their inboard ends at appropriate points around the circumference of a mass 38. The latter is heavy relative

- 11 -

to the wires 32, 34 and 36 the weight of which can thus be substantially disregarded and the tensions of the wires are adjusted by screwing the spigot 26,28 and 30 into or out of their respective bushes 18,20 and 24.

Adjacent to each wire is located a small magnet 40, 42 or 44 and a common return path is provided by means of a flexible electrical connection 46 between the suspended mass 38 and a fourth terminal 48.

The three stretched wires 32, 34 and 36 constitute part of the output circuit of each of three amplifying circuits each of which is constructed so as to have a negative output resistance. Three amplifiers are denoted by reference numerals 50, 52 and 54 having feedback circuits which include variable resistance such as R1, R2 and R3 for adjusting the amplifiers so as to give just the right amount of negative resistance in the output of each amplifier to compensate for electrical losses in the output circuit. The electrical connections from the outputs of the amplifiers are made on the one hand to the common terminal 48 and on the other hand to each of the terminals 26,28 and 30.

The effect of the three amplifiers and the negative output resistance of the amplifiers is to maintain any oscillation set up in any of the strings 32, 34, and 36 since oscillation of the wire in the presence of the magnetic field will produce a back EMF which combines with the negative output resistance characteristic of the amplifier associated with the wire to produce a compensating and opposite electrical current to overcome the back EMF and maintain oscillation.

The frequency at which the wire oscillates will be determined by the tension and clearly if the tension in three wires is the same each of the frequencies of oscillation will be the same.

The amplifiers 50,52 and 54 are arranged to supply an electric current to each of the wires 32, 34 and 36.

The device shown in Fig.1 can be considered to be a clinometer. A clinometer is capable of measuring any angle relative to a datum a clinometer thus differs from a level which is a restricted form of clinometer insofar as it is normally only capable indicating particular inclinations such as zero degrees to the horizontal and/or vertical (the latter being defined as being direction perpendiculor to and parallel to the direction of the force of gravity at any point) and occasionally having provision for one or two other specific inclinations such as $45^{\circ}$.

The clinometer shown in Fig.1 operates as follows. If the datum position is considered to be when the string 32 is parallel to the vertical, then string 32 has the greatest tension of the three strings. If strings 34 and 36 are at $120^{\circ}$ and are also at $120^{\circ}$ to the string 32, then the two strings 34 and 36 will have equal tensions but in each case the tension will be less than that in the string 32.

- 13 -

If now the instrument is rotated slightly clockwise the tension in string 34 will increase whilst that in string 36 will decrease and this difference can be used to generate an electrical signal indicative of level indication. If the angle of rotation is further increased the tension in string 32 will also change significantly and the departure of the natural resonant frequency of all three strings from the normal resonant frequency associated with the vertical can be used in a computation to determine the precise angle from the vertical through which the device has been rotated.

It will thus been seen that the device shown in Fig.1 is not only capable of indicating whether or not a surface is vertical (or conversely)horizontal by provision of an appropriate surface for abutting either a vertical or a horizontal surface, but can also be used to indicate an intermediate angle of inclination between the horizontal and the vertical.

An indication of the difference between the natural resonant frequencies of the strings brought about by changes in tension with changes of inclination to the vertical, can be most simply achieved by comparing the frequency of the oscillating currents in the outputs to the various amplifiers 50, 52 and 54 by means of three comparators 56, 58 and 60. Appropriate buffer amplifiers (not shown) are provided between the outputs of the amplifiers 50, 52 and 54 and the inputs of the comparators 56,58 and 60.

- 14 -

The comparators detect any difference in frequency between the input signals and produce either a D.C. level dependant on the different infrequency between the input signal and of a plurality which is indicative of whether the one signal is of greater frequency than the other or vice a versa. Alternatively the comparators 56, 58 and 60 may produce a variable frequency output signal the frequency of which deviates from a mean frequency depending on whether the one signal is of greater frequency than the other or vice a versa.

By providing appropriate decoding circuits, three output signals can be produced indicative of the natural resonant frequencies and therefore the tensions in the three strings or wires 32, 34 and 36 and using a suitable programme within a computer (typically a micro processor) the appropriate simultaneous equations can be solved so as to give information relating to the inclination of the frame 10 relative to the vertical insofar as its rotation is about an axis perpendiculor to the plane of the frame 10 through the centre of the mass 38.

The outputs of the three comparators 56,58 and 60 are shown connected to the inputs of a decoding circuit 62 the output of which is shown connected to a computer 64 and the output of which is shown connected to an indicating device 66 for indicating the inclination of the device.

- 15 -

Means shown diagramatically at 68 is provided for calibrating the read out device 66.

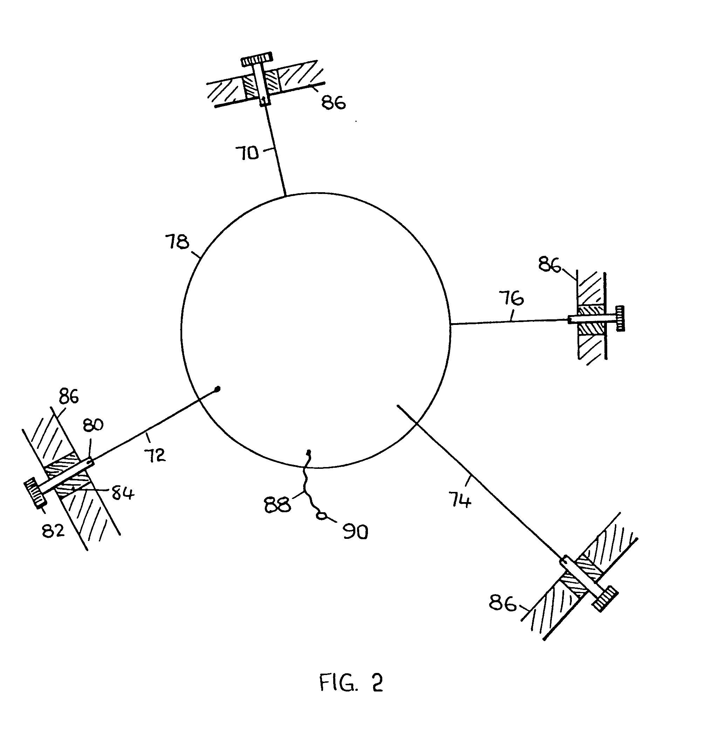

Fig.2 of the drawings illustrates the basic construction of another embodiment of the invention which can be used as an accelerometer in that it will reveal the three cartesian co-ordinates or at least the acceleration vector of a force producing acceleration of the mass. In this second embodiment there are four strings in place of the three of Fig.1 and these are identified by reference numerals 70, 72,74 and 76. The four strings are arranged so that they are directed towards the vertices of a regular tetraheatron and the mass which is identified by reference numeral 78 is suspended from the four wires at the centre of the tetraheatron. Magents (not shown) similar to the magnets 40, 42 etc., of Fig.1 are located adjacent each of the wires 70 through to 76 and the magnets have been omitted from Fig.2 simply for clarity.

In a similar manner the four terminations to which the wires 70, 72 etc., are attached correspond to the terminations for the wires in Fig.1 and to this end as shown in cross-section in Fig.2 are indicated as the same construction. Each is similar and to this end only one is described in detail. Each termination comprises a spigot 80 having a inboard end adapted to be attached to a wire such as 72 and an outboard end 82 which can be twisted, the spigot being externally screw threaded and being received

- 16 -

in a complimentary screw thread in an insulating bush 84 which itself is let into a framework only parts of which are shown at 86 in Fig.2.

The wires are connected in the outputs of four amplifiers similar to the amplifiers 50, 52 etc., in Fig.1 and a return path connection is provided by way of a flexible electrical conductor 88 to a fixed terminal 90 in the same way as the mass 38 is electrically connected to terminal 48 in Fig.1. The outboard ends of the spigots 80 in Fig.2 likewise provide terminals in the same way as the spigots 26, 28 etc., in Fig.1.

By providing four amplifiers and an appropriate number of comparators for comparing the different outputs obtained from the four amplifiers (i.e. the frequencies at which the various wires 70, 72 etc.,)are vibrating so the computing circuit 64 (which must now be more complex than the computing circuit required for Fig.1) can set up the appropriate equations and produce information which if displayed in a display section 66 will reveal the direction in which the accelerating force is acting and also by way of a separate display (shown in dotted outline at 94) the magnitude of the force.

It is to be understood that the devices shown in Figs. 1 and 2 are only diagrammatic and would normally be enclosed within a protective casing and it has already been mentioned that the casing may serve as a screen to reduce

- 17 -

the effect of the normal earths magnetic field. In addition or alternatively additional magnets may be located within any such housing so as to produce local compensation and cancellation of the earths magnetic field.

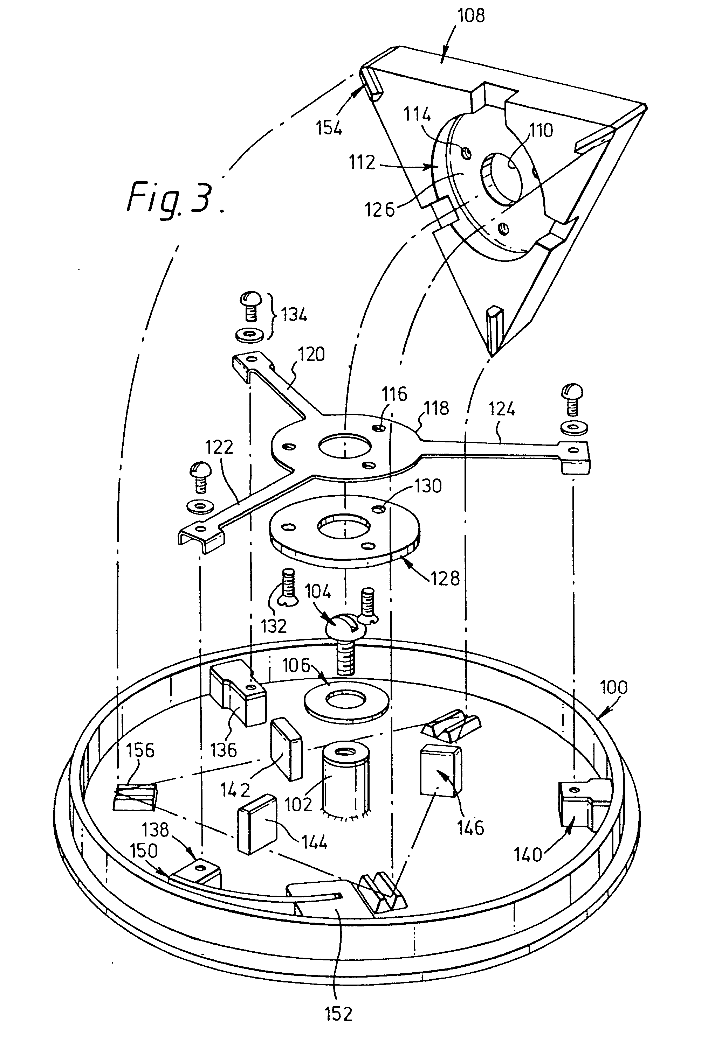

Fig.3 of the drawings illustrated by way of an exploded perspective view one embodiment of the invention to serve as a level/clinometer. The device comprises a generally cylindrical shallow housing 100 having a central peg 102 which is internally threaded so as to receive a safety screw 104. The latter holds captive a washer 106 below which is located a generally triangular mass 108 the diameter of the washer 106 being greater than the diameter of the circular hole 110 in the center of the triangular mass 108. The latter includes a generally cylindrical central cut-away region 112 having three equally spaced triangularly located screw holes one of which is denoted by reference numeral 114. The latter align with three similar screw holes one of which is identified by reference numeral 116 in a generally circular plate 118 at the centre of a spider having three arms 120, 122 and 124. The circular region 118 of the spider is sandwiched between the inside surface 126 of the generally cylindrical cut-away region 112 and a clamping washer generally designated 128 having three equally spaced holes one of which is denoted by reference numberal 130 which align with the holes 116 and 114. Screws one of which is denoted by reference numeral 132 serve to secure the spider to the mass 108 after passing through the washer 128 and circular plate 118 of the spider.

The limbs of the spider 120,122 and 124 are secured at their ends by means of screws and washers one pair of which is denoted by reference numeral 134, the screws 134 being received in threaded holes in three feet 136, 138 and 140 around the inside periphery of the cylindrical-housing 100.

Also within the housing are three magnets 142, 144 and 146 which are located in general alignment between the central peg 102 and the three fee 136, 138 and 140 respectively so as to align with the arms 120, 122 and 124 of the spider.

The spider is formed from titanium or beryllium copper or beryllium nickle or some such material and is typically 0.5 thousands of an inch thick so as to be readily capable of flexing.

The foot 138 is not, like feet, 136 and 140 ridgidly secured to the inside of the cylindrical housing 100 but is instead at the end of a spring arm 150 the end of which is embedded in a fixed stop 152. The spring arm 150 acts in a direction to move the foot 138 in a generally radially outward direction and thedimensions of the arm and the foot 138 are such that movement in this radially outward direction is possible.

The underside of the mass 108 is formed at the three vertices with three safety stops one of which is denoted by reference numeral 154. These each fit into a 'V' shaped groove formed in the inside upper face of the base of the housing 100 one of which is denoted by reference numeral 156.

The spring arm 150 serves to tension the arm 122 of the spider and this in turn tensions the other two arms 120 and 124.

Although not shown, the feet 136,138 and 140 provide electrical connections to the three ends of the arms of the spider and the conduction between the washer and screw 104 and 106 and the central plate 118 of the spider provide a fourth electrical connection.. To this end the housing 100 is formed from electrically insulating material. Alternatively the housing is formed from conductor material and each of the feet 136 and the central pillar 102 are formed from electrically insulating material.

A flexible conductor is used to connect to the central terminal of the assembly as at the screw 104.

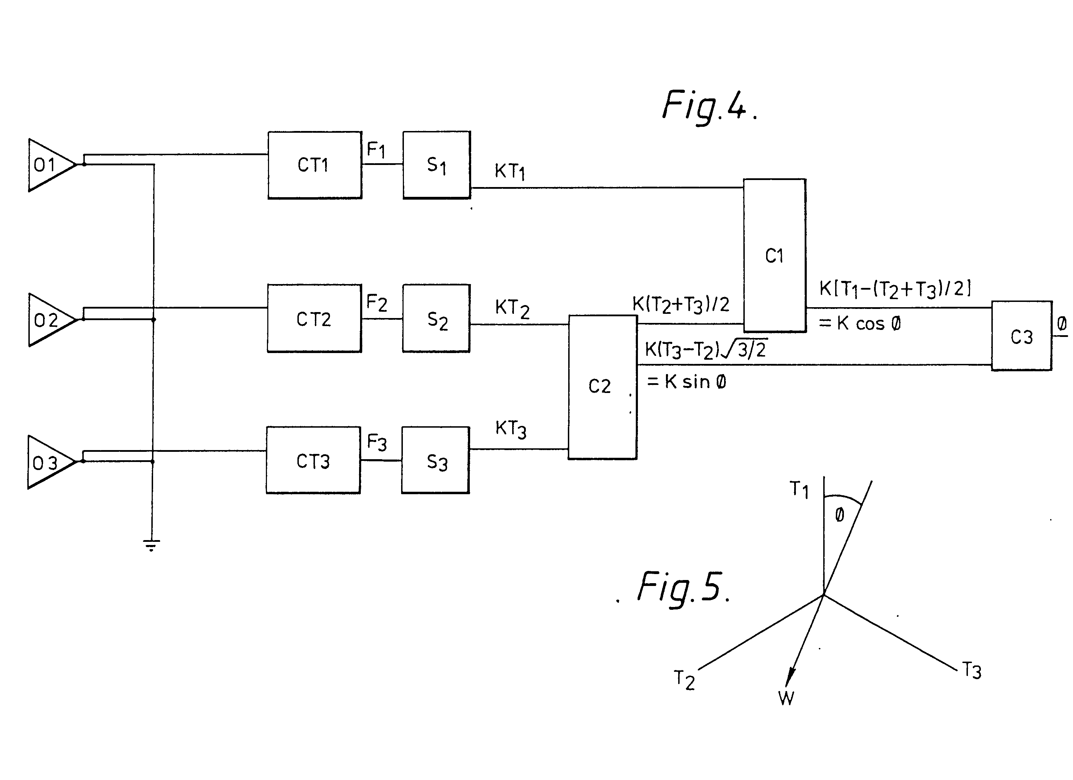

An alternative approach to the signal processing previously described is shown in Fig.4. Each of the amplifiers 01,02,03 corresplnds to the amplifiers 50,52,54. Counter timers CT1, CT2, CT3, produce frequency signals F1,F2,F3 which signals are squared numerically in S1,S2 and S3, to give KT1, KT2 KT3. The decoding and

- 20 -

and computing functions are performed by two computing circuits C1 and C2 to produce from the Kcos θ and Ksin θ signals, a value for θ is C3.

Fig.5 shows the relationship between the angle θ and the three tensions T1,T2,T3.

It can be shown that

$$(F1)^2 = KT1$$
$$(F2)^2 = KT2$$
$$(F3)^2 = KT3$$

Resolving forces gives

$$W \sin \theta = (T_3 - T_2) \ 3/2$$
$$W \cos \theta = T_1 - (T_2 + T_3)/2$$

As an alternative to the visual display devices described, the invention envisages the use of a digital display device using either light-emitting diodes or a liquid crystal display, or an Inogen Moire system or an analog ICD display.

PATENT CLAIMS

1. An instrument for measuring acceleration comprising a mass suspended within a rigid frame by means of three stretched strings connecting the mass to three different points within the frame, each of the strings being formed at least in part from electrically conductive material so that an electric current can pass along the length of the string, electrical connections whereby each of the strings is connected to an electrical drive means and means for creating at least a local magnetic field in the region of each of the strings, the electrical drive means being responsive to any EMF induced as the string moves amd being adjusted so as to supply an appropriate electrical current to the string so that any vibrations set up in the string will be maintained due to the back EMF induced as the string moves in the magnetic field.

2. A measuring instrument as set forth in claim 1 in which the magnetic field vector subtends an angle greater than zero degrees or less than $180^{\circ}$ to the direction of each string.

3. A measuring instrument as set forth in claim 1 further comprising means for adjusting the tension in the strings.

4. A measuring instrument as set forth in claim 1 in which the mass is electrically conductive and a single flexible electrical connection is made to the suspended mass to provide a common return path for three electrical circuits each containing one of the stretched strings, and electrical terminals are provided on the frame for making the other electrical connections to each of the strings.

5. A measuring instrument as set forth in claim 1 further comprising magnet means for compensating for the earth's magnetic field and any other ambient magnetic fields in the region of the strings so as to leave only the locally induced magnetic field in the vicinity of each string.

6. A measuring instrument as set forth in claim 1 further comprising magnetic shielding means for screening the strings from the earth's magnetic field and any other ambient magnetic fields so that only the locally induced magnetic field exists in the region of each of the strings.

7. A measuring instrument as set forth in claim 1 in which the three strings are located symmetrically around the mass.

8. A measuring instrument as set forth in claim 1 further comprising means for comparing the resonant frequencies of the three stretched strings and generating a difference signal in response to any difference in resonance and further comprising means for indicating any such difference.

9. A measuring instrument as set forth in claim 1 in which the mass is suspended by an additional stretched string extending between the mass and a fourth point on the frame.

10. A measuring instrument as set forth in claim 9 in which the four strings are arranged with their length directions pointing towards the vertices of a regular tetrahedron with the mass at the centre thereof.

FIG. 1.

FIG. 2

Fig. 3.

3/4

0037626

Fig.4.

$KT_1$

$F_1$

$F_2$  $KT_2$  $K(T_2+T_3)/2$

$K[T_1-(T_2+T_3)/2]$

$= K \cos \emptyset$

$K(T_3-T_2)\sqrt{3/2}$

$= K \sin \emptyset$

$F_3$  $KT_3$

Fig.5.

4/4

0037626